# EUROPÄISCHE PATENTANMELDUNG

(11) **EP 3 800 596 A1**
(43) Veröffentlichungstag der Anmeldung: **07.04.2021**
(21) Anmeldenummer: 19200838.1
(22) Anmeldetag: 01.10.2019
(51) Int. Cl.: G06Q 10/08, G06Q 50/28

(54) **ÜBERWACHUNG VON ANOMALIEN IN LOGISTIK-NETZWERKEN**

(71) Anmelder: Siemens Aktiengesellschaft, 80333 München (DE)
(72) Erfinder: KLEVESAAT, Gerd, 78467 Konstanz (DE); SACHA, Dr. Dominik, 88662 Überlingen (DE)
(74) Vertreter: Maier, Daniel Oliver

(57) **Zusammenfassung**

Verfahren zum computergestützten Überwachen eines Logistik-Netzwerks (1), in welchem Sendungen (9) an verschiedenen Netzwerkknoten (2) verarbeitet und auf Kanten (3) transportiert werden,
umfassend die Verfahrensschritte:
- Bereitstellen eines Datenmodells (4) das Aspekte des Logistik-Netzwerks (1) beschreibt;
- Überführen eines Stroms (5) von Rohdaten (6) von zumindest einer Teilmenge der Netzwerkknoten über dort verarbeitete Sendungen in das Datenmodell (4);
- Aufbereiten von aus den Rohdaten (6) gewonnen Sekundärinformationen (7) im laufenden Betrieb, zur computergestützten Überwachung von Anomalien in dem Logistik-Netzwerk (1).

## Beschreibung

Die vorliegende Erfindung betrifft das technische Gebiet der computer-gestützten Erkennung und Analyse von Anomalien in Logistik-Netzwerken.

In Logistik-Netzwerken werden Sendungen, beispielsweise Pakete, Gepäckstücke oder Briefe oder sonstiges Stückgut, an verschiedenen Knoten verarbeitet und auf verschiedenen Kanten transportiert. Die Erfassung und Aufbereitung solcher Daten speziell für die Logistik-Domäne, bietet die Grundlage für Entscheidungs-Unterstützende Logistik Systeme (Monitoring & Decision Support). Die zeitabhängige Überwachung and Analyse solcher Netzwerke erfordert computergestützte Verfahren, die den Netzwerk-Betreibern (Domänen-Experten und Operatoren) Transparenz über die aktuelle Situation in dem Logistik-Netzwerk, als auch eine historische Analyse von Normalverhalten und Anomalien ermöglichen. Dadurch können Probleme zeitnah identifiziert und Handlungsbedarf frühzeitig und zielgerichtet abgeleitet werden.

Langfristig wird durch die Analyse ein Verständnis, also Wissen, für das dynamischen Verhalten der Netzwerk-Knoten und deren Beziehung entwickelt, das bei wiederkehrendem Auftreten von Anomalien vom Analyse-System zunächst gelernt und dann automatisiert angewandt werden soll.

Die Daten werden aus verschiedenen Datenquellen in dem Logistik-Netzwerk erfasst und unter Verwendung mehrerer unterschiedlicher Daten-Analyse-Prozesse und Werkzeuge aufwändig für die Logistik aufbereitet und zusammengeführt. Die anschließende Analyse der Daten und die Modellierung von Normalverhalten und Anomalien ist sehr zeitaufwändig und erfordert Expertenwissen, da die Anomalien erkannt und bewertetet werden müssen. Die Anomalie-Muster sind dabei oft in den Rohdaten und der großen Datenmenge versteckt, daher ist eine Reduktion der Daten auf die relevanten Informationen erforderlich. Diese geschieht oft durch eine hinsichtlich Zeitdauer und Umfang aufwändige, fehleranfällige, manuelle Inspektion der Daten mittels verschiedener Standard-Tools, welche den Prozess von der Daten-Erfassung bis hin zur automatischen Erkennung und Nutzung von Anomalie-Informationen nicht durchgängig unterstützen. Außerdem sind solche Standard-Tools nicht auf spezifische Anforderungen und Eigenschaften von Anomalien in der Logistik angepasst.

Beispiele für solche Domänen-spezifische Anomalien befinden sich im Lastverhalten der Knoten zu gewissen Arbeitszeiten, Kreisläufer Sendungen oder das Aufdecken von SLA (Service-Level-Agreements) verletzenden Sendungen. Die Anomalien werden von den Experten manuell interpretiert und die abgeleiteten Handlungen werden oft nicht in das System zurückgeführt.

Der vorliegenden Erfindung liegt daher die Aufgabe zugrunde, das Erkennen und Bewerten von Anomalien zu vereinfachen und weniger abhängig von menschlichen Experten zu machen.

Diese Aufgabe wird durch die in den unabhängigen Ansprüchen beschriebenen Lösungen gelöst. Vorteilhafte Ausgestaltungen sind in den abhängigen Ansprüchen beschrieben.

Gemäss der Erfindung wird ein Verfahren zum computergestützten Überwachen eines Logistik-Netzwerks vorgestellt. In dem Logistik-Netzwerk werden Sendungen an verschiedenen Netzwercknoten verarbeitet und auf Kanten transportiert. Dabei wird ein Datenmodell bereitgestellt, welches Aspekte des Logistik-Netzwerks beschreibt. Ein Strom von Rohdaten von zumindest einer Teilmenge der Netzwerkknoten über dort verarbeitete Sendungen wird in das Datenmodell überführt. Aus den Rohdaten gewonnene Sekundärinformationen zur computergestützten Überwachung von Anomalien in dem Logistik-Netzwerk werden im laufenden Betrieb aufbereitet.

Gemäss einem Ausführungsbeispiel wird der Strom von Rohdaten regelbasiert durch die Sekundärinformationen angereichert.

Gemäss einem Ausführungsbeispiel umfassen die Rohdaten als kleinste Rohdaten-Einheit eine Identifikation einer Sendung an einem Knoten.

Gemäss einem Ausführungsbeispiel umfasst die computergestützte Überwachung von Anomalien das computergestützte Erkennen von unterschiedlichen Kategorien von Anomalien.

Gemäss einem Ausführungsbeispiel umfasst die computergestützte Überwachung von Anomalien das Lokalisieren einer Ursache einer Anomalie und/oder das Erkennen einer zeitbasierten Anomalie.

Gemäss einem Ausführungsbeispiel umfasst die computergestützte Überwachung von Anomalien eine Bewertung von erkannten Anomalien in dem Logistik-Netzwerk und/oder die Erkennung von Abhängigkeiten von in dem Logistik-Netzwerk erkannten Anomalien.

Gemäss einem Ausführungsbeispiel werden die aus den Rohdaten gewonnen Sekundärinformationen mittels eines computerimplementierten lernenden Systems aufbereitet und vorzugsweise auch analysiert, um darin neue und bekannte Anomalie-Muster zu erkennen.

Gemäss einem Ausführungsbeispiel ist das lernende System ausgestaltet, mittels Mensch-Maschine Rückmeldungen die Aufbereitung der Sekundärinformationen zu trainieren, beispielsweise mittel Annotieren von Daten. Das Annotieren von Daten kann das Taggen und/oder Labeln umfassen. Dabei wird das lernende System trainiert Anomalien zu kategorisieren von Anomalien und/oder Aktionen zu ergreifen.

Gemäss einem Ausführungsbeispiel werden die Sekundärinformationen durch interaktive Visualisierungen in Kombination mit Verfahren aus dem maschinellen Lernen und einer skalierbaren Echtzeit Daten-Verarbeitung aufbereitet.

Gemäss einem Ausführungsbeispiel werden die interaktiven Visualisierungen verwendet, um das lernende System durch einen menschlichen Experten zu trainieren.

Gemäss einem Ausführungsbeispiel umfasst die Überwachung von Anomalien die Erkennung eines Kreisläufers und/oder die Erkennung eines anormalen Durchsatzes eines Knotens oder einer Kante und/oder die Erkennung von Sendungen die zu lange im Logistik-Netzwerk verweilen und/oder die Erkennung von widersprüchlichen Informationen über eine der Sendungen und/oder die Erkennung von sich fälschlicherweise ändernden Informationen über eine der Sendungen (beispielsweise wenn das Label falsch gelesen wurde) und/oder die Erkennung einer sich gemäss den Rohdaten scheinbar an mehreren Orten gleichzeitig oder mit unmöglich kurzem Zeitabstand auftretenden Sendung (beispielsweise wenn eine Sendungs-ID verschiedenen Sendungen zugeordnet wurde) umfasst. Ein Kreisläufer ist dabei eine Sendung, die innerhalb des Logistik-Netzwerks von mindestens zwei Knoten im Kreis herumgereicht oder auch innerhalb eines Netzwerk-Knotens von knoten-internen System im Kreis herumgereicht werden und daher ohne weitere Intervention nicht oder mit unnötiger Verzögerung zugestellt würden.

Gemäss einem Ausführungsbeispiel werden gleichzeitig auftretende Anomalien und/oder Abhängigkeiten erkannt. Auf diese Weise können Zusammenhänge erkannte und in grösserem Rahmen gezielt angegangen werden.

Gemäss einem Ausführungsbeispiel werden eine oder mehrere neue noch unbekannte Anomalie computergestützt erkannt und mittels eine Schnittstelle einem Experten vorgelegt, vorzugsweise um das lernende System zu trainieren, diese eine oder mehrere neue noch unbekannte Anomalie, zu bewerten. Dadurch kann das lernende System weiter verbessert und ein höherer Automatisierungsgrad erreicht werden.

Gemäss der Erfindung wird zudem ein Analyse-System vorgestellt, das Mittel umfasst, die ausgestaltet und adaptiert sind das erfindungsgemässe Verfahren durchzuführen.

Gemäss einem Ausführungsbeispiel ist das Lernende Analyse-System ausgestaltet zur Exploration und Überwachung von Anomalien in Logistik-Netzwerken

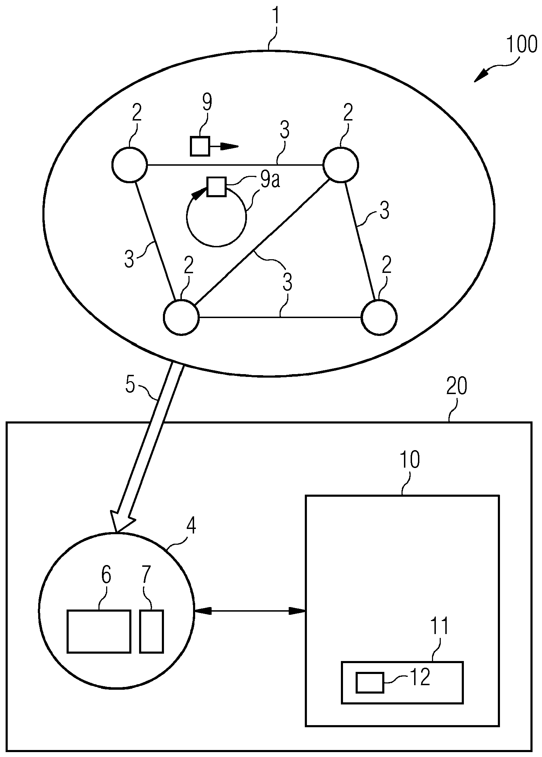

Ausführungsformen der Erfindung werden nachfolgend anhand der Figur 1 beispielsweise näher erläutert.

Figur 1 zeigt eine schematisches Blockdiagramm zur Illustration von Ausführungsbeispielen der Erfindung.

Figur 1 zeigt ein Logistisches System 100, welches ein Logistik-Netzwerk 1, und ein Analyse-System 20 umfasst. Das Logistik-Netzwerk 1 umfasst mehrere Netzwerkknoten 2, beispielsweise Verteilzentren eines oder mehrerer Logistikanbieter und Kanten 3, welche Transportwege von Sendungen 9 zwischen den Knoten 2 repräsentieren.

Das Analyse-System 20 umfasst ein Datenmodell 4, welches zumindest einige Aspekte des Logistik-Netzwerks 1 beschreibt, vorzugsweise das Logistik-Netzwerk beschreibt. Das Analyse-System 20 umfasst zudem ein lernendes System 10, welches beispielsweise ein neuronales Netzwerk simuliert und zudem ein Interface 11 umfasst.

In dem Logistik-Netzwerks 1 werden Sendungen 9 an verschiedenen Netzwerkknoten 2 verarbeitet und auf Kanten 3 transportiert. Um das Logistik-Netzwerks 1 computergestützt zu überwachen wird ein Datenmodell 4 bereitgestellt. Das Datenmodell beschreibt Aspekte des Logistik-Netzwerks 1. Ein Strom 5 von Rohdaten 6 wird von zumindest einer Teilmenge der Netzwercknoten 2 über dort verarbeitete Sendungen 9 in das Datenmodell 4 geleitet. In dem System 20 werden aus den Rohdaten 6 gewonnen Sekundärinformationen 7 im laufenden Betrieb aufbereitet, die zur computergestützten Überwachung von Anomalien in dem Logistik-Netzwerk 1 dienen.

Die Rohdaten 6 umfassen als kleinste Rohdaten-Einheit eine Identifikation einer Sendung 9 an einem Knoten 2. Die computergestützte Überwachung von Anomalien umfasst das computergestützte Erkennen von unterschiedlichen Kategorien von Anomalien und/oder das Lokalisieren einer Ursache einer Anomalie umfasst und/oder eine Bewertung von erkannten Anomalien in dem Logistik-Netzwerk 1 und/oder die Erkennung von Abhängigkeiten von in dem Logistik-Netzwerk 1 erkannten Anomalien.

Die aus den Rohdaten 6 gewonnen Sekundärinformationen 7 werden mittels eines computerimplementierten lernenden Systems 10 aufbereitet.

Das lernende System 10 ist ausgestaltet, mittels eines Interfaces 11 Mensch-Maschine Rückmeldungen die Aufbereitung der Sekundärinformationen 7 zu trainieren, beispielsweise mittel Annotieren von Daten.

Die Aufbereitung der Sekundärinformationen 7 werden durch interaktive Visualisierungen 12 in Kombination mit Verfahren aus dem maschinellen Lernen und einer skalierbaren Echtzeit Daten-Verarbeitung realisiert.

Die interaktiven Visualisierungen 12 werden verwendet, um das lernende System 10 durch einen menschlichen Experten zu trainieren.

Die Überwachung von Anomalien umfasst die Erkennung von Kreisläufern 9a und/oder die Erkennung eines anormalen Durchsatzes eines Knotens 2 oder einer Kante 3 und/oder die Erkennung von Sendungen 9 die zu lange im Logistik-Netzwerk verweilen und/oder die Erkennung von widersprüchlichen Informationen über eine der Sendungen 9 und/oder die Erkennung von sich fälschlicherweise ändernden Informationen über eine der Sendungen 9 und/oder die Erkennung einer sich gemäss den Rohdaten 6 scheinbar an mehreren Orten gleichzeitig oder mit unmöglich kurzem Zeitabstand auftretenden Sendung.

Gleichzeitig auftretende Anomalien und/oder Abhängigkeiten zwischen werden durch das Analyse-System 20 erkannt.

Eine oder mehrere neue noch unbekannte Anomalien werden computergestützt durch das Analyse-System 20 erkannt und mittels eine Schnittstelle 11 einem Experten vorgelegt, vorzugsweise um das lernende System 10 zu trainieren und dabei diese eine oder mehrere neue noch unbekannte Anomalien, zu bewerten.

Gemäss einem weiteren Ausführungsbeispiel wird durch einen Big Data Ansatz, welcher verschiedene Verfahren für die Datenverarbeitung, Anomalie-Erkennung und Anreicherung kombiniert, ein lernendes System für die Analyse und Überwachung von Anomalien in Logistik-Netzwerken realisiert. Dieses basiert auf einem vereinheitlichen Domänen-Datenmodell, welches auf der kleinsten Rohdaten-Einheit - Identifikation einer Sendung an einem Knoten - beruht. Bei der Datenverarbeitung wird der Rohdatenstrom in das Datenmodell überführt und mit speziell für die Logistik relevanten Informationen direkt "on-the-fly" angereichert. Für die Anomalie-Erkennung werden gemäss weiteren detaillierteren Ausführungsbeispielen unterschiedliche Strategien angewandt:
1.) Regelbasierte on-the-fly Anreicherung durch eine Echtzeit-Verarbeitung der Rohdaten und 2.) Eine Analyse von zeitabhängigen Verhalten durch den Einsatz von Methoden aus dem maschinellen Lernen. Dabei wird ferner unterschieden in: a.) Abweichungen von gelerntem Normalverhalten, b.) wiederkehrende Abweichungen und c.) dauerhafte Änderungen in der Netzwerk-Dynamik (Abweichung wird zum Normalverhalten). Die Daten und erkannten Muster werden den Analysten durch interaktive Visualisierung präsentiert, welche eine effiziente Analyse und Bewertung der Muster ermöglichen. Zum einen werden die Visualisierungs-Elemente auf die relevanten Informationen reduziert, um der kognitiven Überlast entgegen zu wirken. Die Daten werden in einer Karte in Kombination mit anderen abstrakten Visualisierungstechniken dargestellt, um die Daten, Anomalien und Netzwerkeigenschaften aus verschiedenen Perspektiven analysieren zu können (Netzwerk, Topologie, zeitabhängiges Verhalten, Sendungsströme). Erkannte Anomalien können von den Experten getaggt und mit weiteren Informationen, wie beispielsweise Handlungs-Empfehlungen, angereichert oder (bereits erfasste Anomalien) bereinigt werden. Das System 20 speichert die angereicherten Anomalien und nutzt diesen Speicher kontinuierlich, um neue Anomalien automatisch anzureichern. Zur Überprüfung und zur effizienten Annotation der gelernten historischen Daten in Kombination mit neuen automatisch angereicherten Mustern, werden die Anomalien und Normalverhalten in einer Clusterdarstellung visualisiert, wobei die erkannten Muster zusammengefasst (in verschiedenen Clustern) annotiert und korrigiert werden können. Die Interpretation der erkannten Anomalien und deren Abhängigkeiten untereinander werden zusätzlich automatisch analysiert und visualisiert (Root-Cause-Analyse). Dabei werden zwei Strategien verfolgt: 1.) Die Analyse zeitlicher Abhängigkeiten beim Auftreten von Anomalien (zeitliche Kausalitätskette),
2.) Anomalie-Abhängigkeiten werden entlang der Netzwerk-Topologie analysiert und dargestellt. Somit können verschiedene Anomalien auf deren Ursprünge an bestimmten Knoten zurückverfolgt werden (beispielsweise, wenn sich ein Problem in Sortier-Zentrum A auf andere die anderen verbundenen Zentren (vorgelagert und/oder nachgelagert) auswirkt).

Gemäss weiteren Ausführungsbeispielen der Erfindung basieren auf einer ganzheitlich integrierten und auf die Logistik angepassten Lösung, die es den Nutzern ermöglicht kontinuierlich zu überprüfen und Rückmeldung zu geben. Es handelt sich um ein lernendes System mit Mensch-Maschine Rückmeldungen, das durch interaktive Visualisierungen in Kombination mit Verfahren aus dem maschinellen Lernen und einer skalierbaren Echtzeit Daten-Verarbeitung realisiert wird, wobei die Analyse-Strategien auf die Logistik Domäne angepasst sind. Die Lösung bietet eine integrierte Benutzer-Schnittstelle 11, wodurch eine Kombination verschiedener Techniken den Domänen-Experten und anderen Nutzern zugänglich gemacht wird. Diese haben die Möglichkeit Feedback zu geben (Anreicherung/Annotation), somit wird Wissen erfasst und im Anschluss automatisiert vom System genutzt.

Dadurch wird auch den Nutzern ohne Expertenwissen der Zugang zu den Daten ermöglicht, um die Daten und Anomalien transparent zu explorieren. Die Erfindung macht somit die Analyse von Anomalien in dynamischen Netzwerken effektiver (bessere Qualität der Ergebnisse), effizienter (schnellere Ergebnisse, niedrigere Kosten durch Experten) und zugänglicher (verschiedene Nutzer entlang der gesamten Analysekette).

## Patentansprüche

1. Verfahren zum computergestützten Überwachen eines Logistik-Netzwerks (1), in welchem Sendungen (9) an verschiedenen Netzwerkknoten (2) verarbeitet und auf Kanten (3) transportiert werden,
umfassend die Verfahrensschritte:
- Bereitstellen eines Datenmodells (4) das Aspekte des Logistik-Netzwerks (1) beschreibt;
- Überführen eines Stroms (5) von Rohdaten (6) von zumindest einer Teilmenge der Netzwerkknoten über dort verarbeitete Sendungen in das Datenmodell (4);
- Aufbereiten von aus den Rohdaten (6) gewonnen Sekundärinformationen (7) im laufenden Betrieb, zur computergestützten Überwachung von Anomalien in dem Logistik-Netzwerk (1).

2. Verfahren nach Anspruch 1, wobei die Rohdaten (6) als kleinste Rohdaten-Einheit eine Identifikation einer Sendung (9) an einem Knoten (2) umfassen.

3. Verfahren nach einem der vorhergehenden Ansprüche, wobei die computergestützte Überwachung von Anomalien das computergestützte Erkennen von unterschiedlichen Kategorien von Anomalien umfasst.

4. Verfahren nach einem der vorhergehenden Ansprüche, wobei die computergestützte Überwachung von Anomalien das Lokalisieren einer Ursache einer Anomalie umfasst.

5. Verfahren nach einem der vorhergehenden Ansprüche, wobei die computergestützte Überwachung von Anomalien eine Bewertung von erkannten Anomalien in dem Logistik-Netzwerk (1) und/oder die Erkennung von Abhängigkeiten von in dem Logistik-Netzwerk (1) erkannten Anomalien umfasst.

6. Verfahren nach einem der vorhergehenden Ansprüche, wobei die aus den Rohdaten (6) gewonnen Sekundärinformationen (7) mittels eines computerimplementierten lernenden Systems (10) aufbereitet werden.

7. Verfahren nach Anspruch 6, wobei das lernende System (10) ausgestaltet ist, mittels eines Interfaces (11) Mensch-Maschine Rückmeldungen die Aufbereitung der Sekundärinformationen (7) zu trainieren, beispielsweise mittel Annotieren von Daten.

8. Verfahren nach einem der vorhergehenden Ansprüche, wobei die Aufbereitung der Sekundärinformationen (7) durch interaktive Visualisierungen (12) in Kombination mit Verfahren aus dem maschinellen Lernen und einer skalierbaren Echtzeit Daten-Verarbeitung realisiert werden.

9. Verfahren nach Anspruch 8, wobei die interaktiven Visualisierungen (12) verwendet werden, um das lernende System (10) durch einen menschlichen Experten zu trainieren.

10. Verfahren nach einem der vorhergehenden Ansprüche, wobei die Überwachung von Anomalien die Erkennung eines Kreisläufers (9a) und/oder die Erkennung eines anormalen Durchsatzes eines Knotens (2) oder einer Kante (3) und/oder die Erkennung von Sendungen (9) die zu lange im Logistik-Netzwerk verweilen und/oder die Erkennung von widersprüchlichen Informationen über eine der Sendungen (9) und/oder die Erkennung von sich fälschlicherweise ändernden Informationen über eine der Sendungen (9) und/oder die Erkennung einer sich gemäss den Rohdaten (6) scheinbar an mehreren Orten gleichzeitig oder mit unmöglich kurzem Zeitabstand auftretenden Sendung umfasst.

11. Verfahren nach einem der vorhergehenden Ansprüche, wobei gleichzeitig auftretende Anomalien und/oder Abhängigkeiten zwischen erkannt werden.

12. Verfahren nach einem der vorhergehenden Ansprüche, wobei eine oder mehrere neue noch unbekannte Anomalien computergestützt erkannt werden und mittels einer Schnittstelle (11) einem Experten vorgelegt werden, vorzugsweise um das lernende System (10) zu trainieren und/oder diese eine oder mehrere neue noch unbekannte Anomalien zu bewerten.

13. Verfahren nach einem der vorhergehenden Ansprüche, wobei die computergestützte Überwachung von Anomalien das Erkennen einer zeitbasierten Anomalie umfasst.

14. Lernendes Analyse-System (10, 20, 100) umfassend Mittel (4, 10, 11, 12) die ausgestaltet und adaptiert sind eines der Verfahren gemäss einem der vorhergehenden Ansprüche durchzuführen.
